# EUROPÄISCHE PATENTSCHRIFT

(11) **EP 1 334 545 B1**
(45) Veröffentlichungstag und Bekanntmachung des Hinweises auf die Patenterteilung: **03.12.2008**
(21) Anmeldenummer: 00931777.7
(22) Anmeldetag: 21.04.2000
(51) Int. Cl.: H02K 1/00

(54) **STATOR EINER ELEKTRONISCH KOMMUTIERTEN, ZWEIPHASIGEN RELUKTANZMASCHINE**
STATOR OF AN ELECTRONICALLY SWITCHED TWO-PHASE RELUCTANCE MACHINE
STATOR D'UN MOTEUR A RELUCTANCE BIPHASE A COMMUTATION ELECTRONIQUE

(30) Priorität: 26.05.1999 RO 9900601; 21.04.2000 RO 0000431
(43) Veröffentlichungstag der Anmeldung: 13.08.2003
(73) Patentinhaber: Lungu, Iancu, Bucharest 3 (RO)
(72) Erfinder: Lungu, Iancu, Bucharest 3 (RO)
(86) Internationale Anmeldenummer: PCT/RO2000/000010
(87) Internationale Veröffentlichungsnummer: WO 2000/074204

(56) Entgegenhaltungen:
- EP-A- 0 289 292
- WO-A-90/11641
- WO-A-96/09683
- DE-A- 3 532 818
- DE-A- 4 401 847
- DE-C- 4 233 679
- FR-A- 2 644 641
- US-A- 4 895 536
- US-A- 5 365 137
- US-A- 5 866 965

## Beschreibung

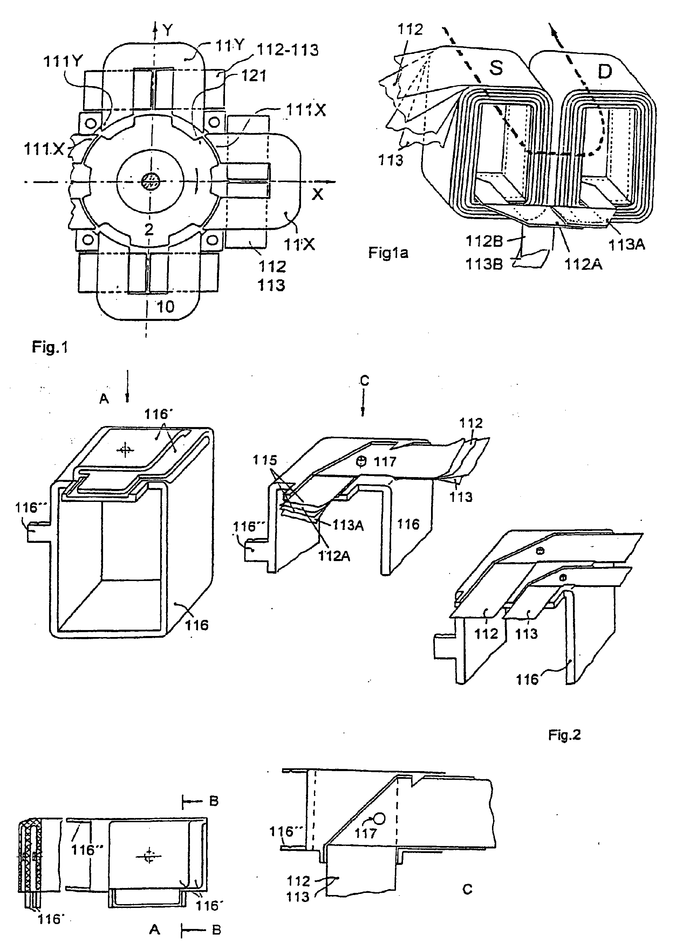

Die Erfindung betrifft das wicklungstragende Teil von elektronisch kommutierten Reluktanzmaschinen mit getrennten Elektromagneten. Im Laufe der Beschreibung werden wir dieses Teil "Feldteil" oder "Stator" nennen. Die Reluktanzmaschinen werden manchmal SR (Switched Reluctance) -Maschinen genannt. Solche Maschinen sind vom Stand der Technik aus den internationalen Patentanmeldungen WO 96/09683 und WO 98/23024 bekannt. Die Erfindung bietet technologische Lösungen für die Ausführung des Stators solcher Maschinen. Anders als bei herkömmlichen Motoren s. Fig. 1 hat der Stator vier unabhängige Joche 11, die mit je zwei freitragenden, getrennt zu fertigenden Wicklungen bestückt sind.

Diese beim Stand der Technik erwähnten, prinzipiell sehr einfachen Maschinen mit getrennt einsetzbaren Elektromagneten müssten jedoch mit einer geeigneten Fertigungstechnik ausgeführt werden, um die Einhaltung eines möglichst kleinen, gleichbleibenden Luftspaltes zu garantieren.

Aufgabe der Erfindung ist, einem Feldteil vorzuschlagen, welches bei Motoren, wie z. B. in den WO 96/09683 beschrieben einsetzbar ist.

Die Ansprüche der vorliegenden Erfindung sind darauf ausgerichtet, zu der Lösung dieser Aufgabe beizutragen.

Die Lösung der Aufgabe erfolgt nach der Lehre des Hauptanspruchs. Die Unteransprüche beziehen sich auf detailliertere Ausgestaltungen der zur Zusammenbau des Stators notwendigen Bauteile.

Der Einfachheit halber wird im Laufe der Beschreibung ein SR-Motor (Fig. 1, Querschnitt,) als Beispiel genommen wie in der WO 96/09683 beschrieben, mit vier U-Jochen 11 aus Blechpaketen die eine bifilare Wicklung 112-113 aus Metallbändern tragen, die hier als U-förmigen Joche 10 genannt werden.

Die hier beschriebenen Lösungswege sind durch einfache Anpassung auch für andere Konfigurationen von SR-Maschinen dieser Art einsetzbar. Die zur Herstellung der U-förmigen Joche 10 notwendigen Wicklungen 112-113 werden aus zwei metallischen Bändern (oder Drähten) mit dazwischengelegten Isolationsfolien (bifilare Haupt- <112> u. Nebenwicklung <113>) gewickelt.

Da das Wickelband, anders als der übliche Kupferdraht eine Vorzugsbiegerichtung hat und nicht abisoliert zu werden braucht, ist die maschinelle Ausarbeitung der Wicklungsanschlüsse (z. B. durch Falten, Prägen, Ultraschallschweißen) erheblich vereinfacht. Für die Wicklungsherstellung werden z.B. die Anfänge 112A, 113A, der Bänder mit dazwischengelegten Mylarfolien 115 zu 90° gefaltet und im Faltbereich durchbohrt, um dadurch auf dem Wickelkern 116 eingehängt zu werden, (Fig.2). Wie hier ersichtlich, hat der Wickelkern 116 zwei angeformte Laschen 116' mit Clipshaken die die Anfänge der Haupt- bzw. Nebenwicklungen (112A, 113A) untereinander isolieren. Letztere ragen in die Bohrung 117 aus dem Faltbereich der Anfänge der Bänder hinein, was die elektrisch/ mechanisch getrennte Fixierung der zwei Leitbänder 112, 113 gegenüber dem Wickelkern gestattet. Der Wickelkern 116 mit recheckigem Querschnitt kann wie üblich für die Bewicklung mit Draht Seitenränder haben, wobei diese bei der Ausführung mit Wickelbändern nicht notwendig sind (Fig. 2).

Der Wickelkern 116 wird dann entsprechend der Windungszahl gedreht, um Haupt-(112) und

Nebenwicklung 113 gleichzeitig aufzuwickeln. Das Ende der Wicklung wird dann mit Hilfe der Seitenlaschen 116" vorfixiert, damit die Windungen nach dem Abschneiden des Wickelbandes nicht zurückfedern. Je zwei Wicklungen werden in Reihe geschaltet. Eine Paralellschaltung der Wicklungen ist auch möglich, z. B. wenn es darum geht, die gleichen Wicklungen bei einer zweimal niedrigeren Spannung zu verwenden. Die links (D) und rechts (S) auf dem Joch 11 eingeschobenen Wicklungen 112-113 werden funktionsrichtig miteinander verbunden (Anfang 112 links, -Anfang 112 rechts, Anfang 113 links, Anfang 113 rechts).

Dafür können die parallel zu den U-Schenkeln abgewinkelten Anfänge der Wicklungen noch einmal in Richtung des Mittelteils des U-Jochs 11 (Fig.1 durch Fettstrichlinie gedeutet, Wickelkern nicht gezeichnet) gefaltet werden. Die von links und rechts ankommenden, sich überlappenden Anfänge 112A, 113A der Leitbänder 112 und 113 können gelötet oder ultraschallgeschweißt werden, und so mechanisch und elektrisch miteinander verbunden werden.

Dieser Vorgang kann sowohl vor, wie auch nach der Montage der Wicklungen auf die U-Blechpakete 11 erfolgen. Der weitere elektrische Anschluß der damit in Reihe geschalteten Bandleiter 112 und 113 erfolgt dann an den Enden der linken bzw. der rechten Wicklung, s. Fig. 1a - Fig.3.

Deren Enden 112B, 113B werden zu diesem Zweck steckerartig geschnitten, (gebogen oder geprägt), oder, (z.B. bei Drahtwicklungen) mit eigenständigen Steckerfahnen versehen.

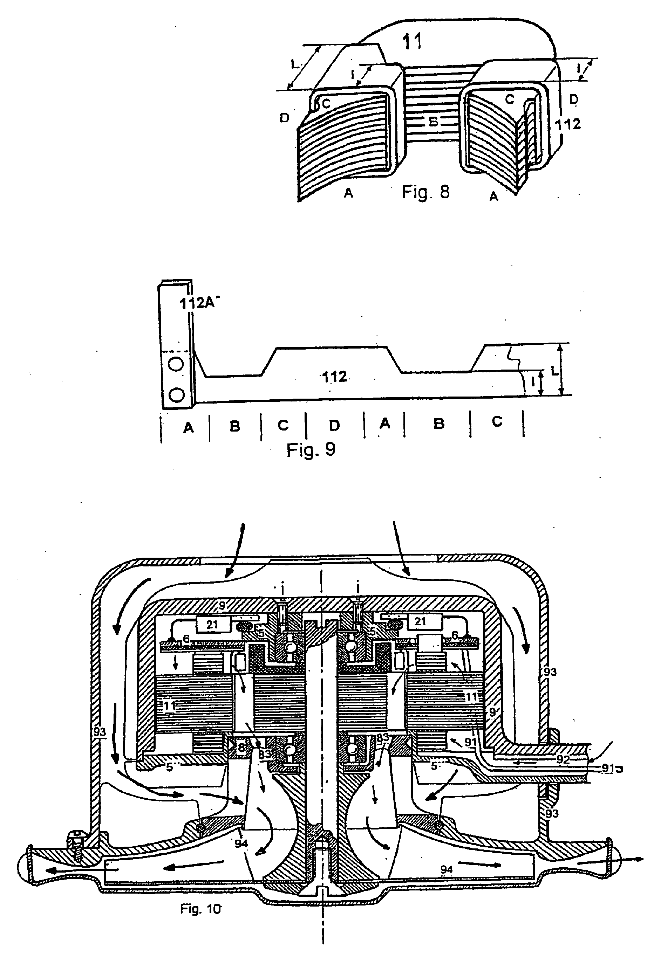

Die Verwendung der U-Joche 11 gestattet den Einsatz einer besonderen Wicklung mit niedrigerem Widerstand, der aus einer partiellen Vergrösserung der Breite (des Querschnitts) des Wickelbandes resultiert. Der Abschnitt jeder Windung dass sich zwischen den U-Schenkeln befindet, hat die übliche Breite 1, die etwas geringer als die Schenkelhöhe ist, wobei der Rest der Windung mit der Höhe L erheblich breiter sein kann. (Seite B, Fig. 8- hier ist links die neue Wicklungsart, rechts zum Vergleich die alte, jeweils nur die erste Windung gezeichnet)

Dies ist möglich, weil die Wickelbandbreite hier (Seiten A, C, D) nicht mehr von der Tiefe des U-Joches 11 beschränkt ist. Die Abwicklung einer Windung (Seiten A, B, C, D) ist in der Fig. 9 sichtbar. Hier wurden die Anfänge der Wicklung (als Beispiel) mit Hilfe getrennter Anschlussstücke 112A', 113A'(Seite A) ausgeführt, die ultraschallgeschweisst werden können. Auf diesem Wege kann z. B. eine Aluminiumwicklung mit leicht lötbaren Kupferanschlüssen (112A') versehen werden. Diese Wicklungsart ist bei Motoren mit wenigen Windungen leichter realisierbarer und gestattet einen Erhöhung der Leistungsausbeute oder die Reduzierung der Eisenmenge (der Eisenverluste). Bei gleichem Widerstand bzw. gleicher Amperewindungszahl gegenüber der Ausführung mit konstantem Querschnitt (Fig. 1a) können hier Joche mit kürzeren Schenkeln, also weniger Eisen, eingesetzt werden.

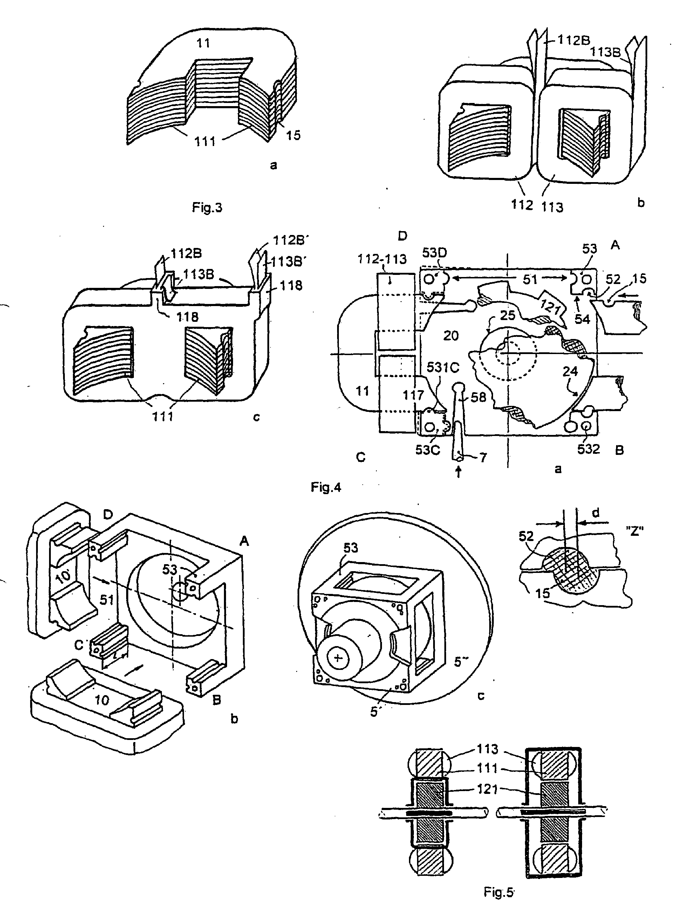

Der aus einem U-Joch 11 mit zwei Wicklungen 112-113 zusammengesetzte U-förmigen Joch 10 ist der Grundbaustein für die Herstellung des Stators 1 der Erfindung nach, s. Fig.3.

Fig. 3a zeigt das U-Joch 11 mit Polflächen 111 und seitliche Befestigungsnuten 15, welches durch einen vom Stand der Technik bekanntem Verfahren aus Stanzblechen pakettiert wurde.

Fig. 3b zeigt das Joch mit zwei Wicklungen nach Fig. 1 und 2 wie vor dem Umspritzvorgang.

Fig. 3c zeigt den U-förmigen Joch 10, welcher z.B. mit einem Thermoplast umspritzt wurde, wobei mindestens eine Seite des Elektromagneten mit Polflächen 111 versehen ist, die einem mobilen Teil 2 (Rotor) über einem Luftspalt zugewandt sind. Dabei wurden feste, räumlich präzise angebrachte Steckerfahnen 112B-113B, 112B'-113B' aus den Enden der zwei Wicklungen gebildet. Eine Seite der Steckerfahne 112B bildet die Verbindung zur Haupt-(112), die andere 113B zur Nebenwicklung 113. Dafür muss das Werkzeug derart ausgebildet werden, dass zwischen den Steckerfahnen 112B-113B, die in der Spritzgiessmatrize während des Spritzgiessvorganges eingeklemmt sind, Kunststoff zur Versteifung eingespritzt wird. Werkzeugtechnisch ist es einfacher, die Bänder 112-113 einige Millimeter vom Wickelrand (Höhe des Ansatzes 118) entfernt, rundherum umzuspritzen. Die noch freien Enden der Bänder (112B, 113B), die blank geblieben sind (diese waren im Werkzeug eingespannt) werden wie das Ende 113B z.B., s. Fig. 3c über den Kunststoffansatz gebogen, um so die Steckerfahnen zu bilden. Weil alle für einen oder mehreren Maschinentypen notwendigen id U-förmigen Joche identisch sind, können diese kostengünstig in Großserie (automatisierte Fertigung) hergestellt werden.

Der maschinell leicht zu handhabende U-förmigen Joch 10 kann von Montagerobotern in einem Rahmen 5 eingefügt/befestigt werden, um den Stator 1 zu bilden, s. Fig.4b. Bei den meisten Motoren (der Erfindung nach) erfolgt also die Befestigung zum Rahmen 5 über die Außenecken der U-förmigen Joche 10 im Bereich der Statorpole 111, also in unmittelbarer Luftspaltnähe, so dass die Wicklungen außen bleiben, auch wenn der Rotorraum 20 geschlossen ist. Dies ist wünschenswert, zumal Schmutzpartikel den Rotor 2 blockieren könnten. Diese neue mechanische Bauweise gestattet auch eine bessere Kühlung. Außerdem sind dadurch kurze Befestigungswege zwischen den Rotor- (121)- bzw. Statorpolflächen 111 möglich, die eine bessere Einhaltung der sehr wichtigen, engen Toleranzen im Luftspaltbereich erlauben. Fig. 5 zeigt schematisch mit fettgezeichneten Linie einen Vergleich der Länge der Befestigungswege (von Lagerstelle zu Lagerstelle) zwischen Rotorpolen 121 und Statorpolen 111 bei üblichen Motoren (links) bzw. einen Motor der Erfindung nach (rechts). Bei den üblichen Motoren (links) befinden sich die Wicklungen (113) unter den Lagerschildern (fettgezeichnete Linie). Der Motorrahmen (Fig.4), befestigt die Joche 11 der U-förmigen Joche 10 und positioniert den Stator 1 und die dazugehörenden Bauteile gegenüber dem Rotor 2. In der einfachsten Form besteht dieser aus einem Grundrahmen 5' mit Säulen 53.

Der Motorrahmen 5 hat Montageansätze oder Nester, die es gestatten, (Variante nach Fig.4c) dass die elektrischen Teile genau auf einem Flansch 5 " positioniert werden. Der Rahmen wird vorzugsweise aus einer Aluminiumlegierung druckgegossen.

Der Rahmen 5 hat Öffnungen 51, in denen die Enden der U-Joche 11 eingesetzt werden, wobei deren Seitenwände z. B. halbrunde axial gerichtete Nuten 52 haben, die anderen halbrunden Nuten 15 gegenüberstehen, die in den Außenecken der U-förmigen Joche 10 praktiziert sind, s. Fig. 4.

Die vier Öffnungen 51 werden von vier Säulen 53 gebildet, die vom vorderen zum hinteren (abnehmbaren) Lagerschild verlaufen. An den Innenseiten 54 dieser Säulen wird die Befestigung der U-Joche 11 über zweckmässige Verfahren vorgenommen, wie folgt:
- Wie in Fig. 4a, linke Hälfte (Quadrant C und D) sichtbar, können die U-förmigen Joche 10 senkrecht zu der Zeichnungsebene zwischen den zwei Säulen 53C, 53D eingeschoben werden. Dabei rasten die halbrunden Stege 531 C, 531 D in den seitlichen Befestigungsnuten 15 der U-förmigen Joche 10. Dies erfordert allerdings aus Toleranzgründen eine hohe Fertigungspräzision.

Um die U-Joche 11 spielfrei zu befestigen, besteht die Möglichkeit, die Säulen 53 bei der Montage auseinanderzuspreizen. Dafür hat die Grundplatte des Rahmens 5 z. B. vier keilförmige Einschnitte 58. Diese werden während der Montage mit Keile 7 aufgeweitet, so dass die Säulen 53 sich ca. 0,1 mm nach außen spreizen (Ecken gestrichelt in der linken Zeichnungshälfte). So können die Joche 11 leichter (mit Spiel) eingefügt werden. Die zurückfedernden Säulen 53 spannen spielfrei die Joche 11, wenn die Keile 7 zurückgezogen werden. Durch dieses Verfahren können die U-förmigen Joche 10 allerdings nur in axialer Richtung montiert werden, und die oberen Enden der Säulen 53 sind frei. Der Rahmen 5 kann also mit einem flachen Lagerschild über die Bohrungen 53D verschlossen werden, wobei die Säulen 53 die Länge des Blechpaketes eines U-Joches haben. Es ist auch möglich, zwei Halbrahmen, die vorzugsweise identisch sind, zu verwenden, wie in Fig. 4b, wo die vier Säulen 53 halb so lang wie die Blechpakete sind, so dass die Joche 11 bzw. der Rotor zwischen die zwei "Halbrahmen", also ohne getrenntes Lagerschild eingespannt sind.

Eine Konstruktion mit zwei Halbrahmen ist ebenso möglich, wobei jeder mit je zwei Säulen 53 ausgestattet ist (Variante 1,- Säulen A und C, - Variante 2 die Säulen A und B) die die Länge des Blechpaketes haben. Durch winkelversetztes Zusammenschieben (um 90° , bzw. 180° je nach Variante 1 oder 2) der zwei Halbrahmen über die vier Joche kann man auch eine zweckmässige Montage erreichen. Eine höhere Montagegenauigkeit, sogar mit grob tolerierten (preiswerten) Teilen, kann mit Hilfe einer toleranzausgleichenden Methode mit so genannten "flüssigen Nieten" erfolgen.

Durch Aushärtung der "flüssigen Nieten", kann man Teile mit groben Toleranzen präzise in einer beliebigen Stellung gegenseitig befestigen, um beim Zusammenbau an entscheidender Stelle enge Toleranzen einzuhalten. Dafür wird z. B. folgendermaßen verfahren:
- in der Rotoröffnung 20 wird eine Kalibrierwalze 24 eingesetzt, deren Außendurchmesser um das Maß des Luftspaltes größer ist als der Rotordurchmesser und über die Lagerstelle 25 zentriert,
- die U-Joche 1 werden radial, z. B. einer nach dem anderen aus der gleichen Richtung (durch schrittweise Verdrehung des Motorrahmens 5 je Montageschritt) in den Motorrahmen 5 eingeschoben.

Dabei können die vier Säulen 53 des Rahmens 5 auch oberhalb der Joche 11 durch einen Ring (Flansch 5") verbunden werden, welcher die Herausnahme der Kalibrierwalze und die Einführung des Rotors gestattet. (Fig.4c).
- mit einer geeigneten Vorrichtung werden alle U-förmigen Joche 10 mit den Polflächen dann gegen der Kalibrierwalze 24 angedrückt und in dieser Stellung durch Einspritzen einer Zinklegierung in den sich gegenüber befindenden halbrunden Nuten 52 ,15 unverrückbar befestigt. Anstelle der Zinklegierung kann jeder beliebige härtbare Stoff eingespritzt werden. Bei der Montage der U-förmigen Joche 10 kann anstelle einer Anpressung von außen deren elektromagnetische Haltekraft eingesetzt, werden, falls diese vom Strom durchflossen werden, wobei die Kalibrierwalze 24 magnetisch sein müsste.

Auf diese Weise lässt sich nicht nur eine Haltekraft erreichen, sondern auch die Qualität der Montage überprüfen. Liegt einer der 1 U-förmigen Joche 10 (z. B. wegen der Verschmutzung der Polflächen) nicht richtig an der Kalibrierwalze an, oder ist ein Windungsschluss vorhanden, so weicht die Reluktanz dieses Magnetkreises von einem vorgegebenen Wert ab, was sich über den Verlauf der Spannungsänderung im Falle einer schnellen Stromänderung überprüfen lässt. So ist es möglich, nicht nur die Montage zu vereinfachen, sondern auch die Qualität der mechanischen/ elektrischen Eigenschaften eines oder aller U-förmigen Joche und deren Verbindungen zu überprüfen. Wie in der rechten Hälfte der Fig.4, in den Quadranten A und B sichtbar, siehe Detail "Z", ist es hier nicht notwendig, dass die Halbnuten 15, 52 genau übereinstimmen. Wenn die Polflächen 111 in die optimale Funktionsstellung am Anschlag mit der Walze 24 sind, können die halbrunden Nuten 15, 52 um einen Abstand d, welcher aus der Toleranzkette resultiert, versetzt sein. Der eingespritzte, härtbare Stoff (Zinklegierung, Kunststoff, Harz) füllt den schraffierten Raum und bildet so nach der Aushärtung einen Riegel, wobei ein Toleranzausgleich erfolgt. Es ist ebenso denkbar, einen durch Erwärmung aufgeweichten Stift in den Nuten 52-15 zwischen U-förmigen Jochen 10 und Rahmen 5 schnell einzuschiessen und diesen sofort (in plastischem Zustand) mit einen Schlagdorn so zu stauchen, dass er die vorhandenen Hohlräume 52, 15 wie die flüssige Niete auffüllt. Es ist auch möglich, einen dehnbaren Röhrchen mit Hilfe eines Innendrucks aufzuweiten, welches in der Art eines seitlich dehnbaren Riegels die U-förmigen Joche 10 gegenüber dem Rahmen 5 arretiert. Es ist ebenso möglich, eine Befestigung mit festen Bauteilen (Stifte, Schrauben) zu realisieren.

Dabei muss jedoch mit engen Toleranzen gearbeitet werden, weil die Toleranzanpassung an einer Kalibrierwalze nicht mehr erfolgt.
- nach der Entfernung der kalibrierten Anschlagwalze 24 definieren die Polflächen 111 der U-förmigen Joche 10 genau den Durchmesser des Rotorraumes 20 und somit die genaue Einhaltung des Luftspaltes.

An den Rahmen 5 wird der Motor befestigt.

Zusätzlich dient der Motorrahmen 5 z. B. im Bereich des Flansches 5" als Kühler für die Transistoren 21 und die Leistungsdioden 22. In Sonderformen können Verlängerungen dieses Rahmens als Motor- oder Pumpengehäuse ausgebildet werden. Ebenso kann dieser Rahmen 5 als Verlängerung eines anderen Körpers (Getriebekörper, Pumpenblock u. s. w...) gebildet werden. Fig.4 b, c, zeigen perspektivische Ansichten zweier Varianten des Rahmens 5, wobei die c-Variante für die radiale Montage der U-Förmigen Joche 10 vorgesehen ist.

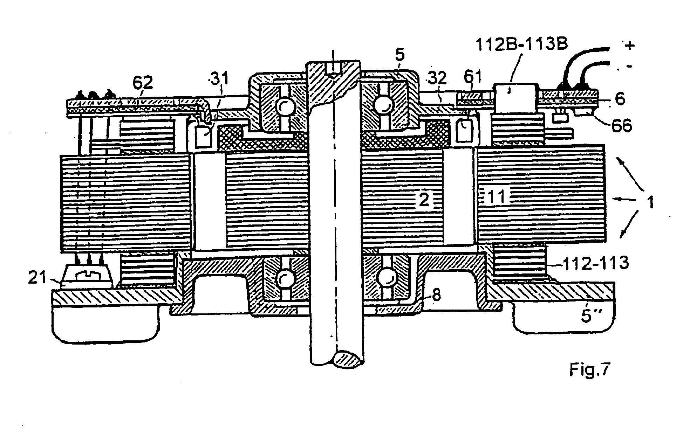

Fig.7 zeigt einen Querschnitt durch einen Motor, z.B. mit einem Rahmen 5 wie in Fig. 4c dargestellt, wo die axiale Anbringung des Leiterverbundes 6 und anderer Motorelemente ersichtlich sind. Der Rahmen 5 hat hier einen Flansch 5", gegebenenfalls mit Kühlrippen, was als Kühler für Motorwärme bzw. für die Elektronikbauteile dienen kann. Die Motorteile (Rotor 2, Stator 1, Joche 11, Hallsensor 31, Leiterverbund 6, Leistungsschalter 21, Wicklungen 112-113, Gebermagnet 32, u.s.w...) haben die Bezeichnungen aus den vorherigen Seiten. Ein rundes Lagerschild 8 mit Kugellager verschliesst den Rotorraum nach Montage des Rotors 2.

Die Vorteile der erfindungsgemässen Bauweise wurden im Laufe der Beschreibung verdeutlicht. Dank der umspritzten U-förmigen Joche 10 braucht der Motor unter normalen Bedingungen kein Gehäuse und hat dank der Bandwicklung mit hohen Füllfaktoren besonders günstige elektrische und thermische Eigenschaften. Sollte es für den Schutz der Leiterverbundplatte 6 oder für den Schutz des ganzen Motors, oder für die Geräuschreduzierung notwendig sein, so kann dieser insgesamt oder teilweise (nur die Verbindungen und die Elektronik, z. B.) in einem geeigneten Gehäuse untergebracht werden.

Fig. 10 zeigt den Querschnitt einer Motor- Gebläseeinheit (z.B. für Staubsauger) mit besonderen thermischen Merkmalen die durch die Verwendung des Multifunktionsrahmens 5 im Zusammenhang mit anderen konstruktiven Lösungen möglich ist.

Ein Teil der Wärme, die in den Wicklungen entsteht, kann direkt an den Flansch 5" (mit strömungsgünstig gestalteten Kühlrippen) abgeführt werden. Die untere Seite der Wicklungen 112-113 liegt an den Flansch 5" an und überträgt die Wärme durch direkten Kontakt bzw. über eine Wärmeleitschicht. Die Reibungswärme des unteren Lagers wird auch über das Lagerschild-Einlaufstück 8 dem Flansch 5" zugeleitet. Die Leistungsschalter 21 sind direkt an dem Leiterverbund 6 angeschlossen, fuhren die Wärme jedoch an ein Gehäuse 9 ab, welches über dem Rahmen 5 auch die Wärme vom oberen Lager abführt.

Das Gehäuse 9 ist so gebaut, dass es in thermischem Kontakt zu den Jochen 11 steht und an dem Flansch 5 "ohne eine Dichtung anschliesst. Die Anschlüsse 91 des Motors werden durch eine rohrähnliche Leitung 92 aus einem den Motor umgebenden Strömungsgehäuse 93 seitlich herausgeführt. Das vom Gebläse 94 durch die Öffnung 95 des Strömungsgehäuses 93 angesaugte Medium (Luft, ggf. mit Verunreinigungen-, s. fettgezeichnete Pfeile) umspült und kühlt also wirksam das Gehäuse 9 und den Flansch 5 ", also den gekapselten Motor. Dabei können Schmutz bzw. Wasser trotz fehlender Dichtungen nicht in den Motor eindringen, weil dessen Gehäuse 9 sich innerhalb eines Unterdruckraumes (Strömungsgehäuse 93) befindet, wodurch im Motorraum ein relativer Überdruck herrscht, zumal saubere Luft in den Motorraum durch die Leitung 92 gelangt.

Praktiziert man z. B. in das Lagerschild 8 Öffnungen 83 , so kann gezielt eine Kühlströmung (dünne Pfeile) aus sauberem Luft durch den Motorraum geleitet werden, die sich dann beim Austritt mit dem unsauberen Hauptluftstrom (fettgezeichnete Pfeile) vermengt.

## Patentansprüche

1. Wicklungstragendes, ein Drehfeld erzeugendes Feldteil einer elektronisch kommutierten, zweiphasigen Reluktanzmaschine, aus einzelnen, gewickelten Jochen zusammengesetzt, wobei es aus einem Zusammenbau mehrerer wicklungstragender U-förmiger Joche (10) besteht, die auf einem nichtmagnetischen Trägerrahmen befestigt sind, welcher aus einer lagertragenden Platte mit Säulen gebildet ist, **dadurch gekennzeichnet, dass** diese Säulen (53) von einer vorderen bis zu einer hinteren lagertragenden Platte verlaufen und Nuten (52) aufweisen, die in etwa gegenüber den Nuten (15) der U-förmigen Joche (10) liegen und dass in diese Nuten (52, 15) ein sich in flüssigem oder noch plastischem Zustand befindlicher, härtbarer Stoff eingebracht wird, welcher diese miteinander kommunizierenden Nuten (52, 15) zwischen den gegenseitig zu befestigenden U-förmigen Jochen (10) und dem Rahmen (5) mit Säulen (53) füllt.

2. Wicklungstragendes, ein Drehfeld erzeugendes Feldteil dem Anspruch 1 nach, **dadurch gekennzeichnet dass** die formschlüssige Befestigung der U-förmigen Joche mit Hilfe eines durch Erwärmung aufgeweichten Stiftes erfolgt, welcher in den Nuten 52-15 zwischen den U-förmigen Jochen (10) und den Säulen (53) des Rahmens (5) schnell eingebracht und sofort in plastischem Zustand mit einem Schlagdorn eingestaucht wird, so dass er die vorhandenen Hohlräume 52, 15 wie eine Niete auffüllt.

3. Wicklungstragendes, ein Drehfeld erzeugendes Feldteil dem Anspruch 1 nach, **dadurch gekennzeichnet, dass** die Befestigung der U-förmigen Joche mit Hilfe von vorgefertigten, in die kommunizierenden Nuten (15, 52) zwischen diesen U-förmigen Jochen (10) und den Säulen (53) des Rahmens (5) eingeführten dehnbaren Röhrchen erfolgt, welche mit Hilfe eines Innendrucks aufgeweitet werden, so dass diese,in der Art eines seitlich dehnbaren Riegels die U-förmigen Joche (10) gegenüber der Säulen (53) des Rahmens (5) arretieren.

4. Wicklungstragendes, ein Drehfeld erzeugendes Feldteil den vorherigen Ansprüchen nach, **dadurch gekennzeichnet, dass** die Polflächen (111) der U-förmigen Joche (10) an einer Kalibrierwalze (24), die den Durchmesser des Rotorraumes (20) hat, die in den Lagerstellen (25) zentriert ist, zum Anschlag gebracht werden und dabei die U-förmigen Joche (10) in dieser Stellung befestigt werden.

5. Wicklungstragendes, ein Drehfeld erzeugendes Feldteil dem Anspruch 4 nach, **dadurch gekennzeichnet, dass** die U-förmigen Joche (10) durch elektromagnetische Kraft an der Kalibrierwalze (24) angedrückt werden.

6. Wicklungstragendes, ein Drehfeld erzeugendes Feldteil dem Anspruch 1 nach, **dadurch gekennzeichnet, dass** die Wicklungen der U-förmigen Joche 10 mit Wickelleitern (112, 113) ausgeführt werden, die entlang einer Windung (A, B, C, D) veränderliche Querschnitte haben, derart, dass zwischen den Schenkeln (B) der U-Joche (11) jede Windung dünner ist als an deren Seiten (A, C, D).

7. Wicklungstragendes ein Drehfeld erzeugendes Feldteil dem Anspruch 1 nach, **dadurch gekennzeichnet, dass** es insgesamt oder teilweise durch ein am Rahmen (5) befestigtes Gehäuse geschützt ist, welches die Motorteile befestigt oder schützt.

8. Wicklungstragendes, ein Drehfeld erzeugendes Feldteil nach dem Anspruch 1, insbesondere für Strömungsmaschinen, **dadurch gekennzeichnet, dass** es in einem Motorgehäuse (9, 5") untergebracht ist, welches thermischen Kontakt mit wärmebelasteten Motorteilen wie U-Jochen (11) und Leistungsschaltern (21) hat.

9. Wicklungstragendes ein Drehfeld erzeugendes Feldteil nach dem Anspruch 8, **dadurch gekennzeichnet, dass** das Motorgehäuse (9, 5") sich innerhalb eines gehäuseähnlichen Abschnitts (93) der Ansaugleitung befindet und dass innerhalb des Motorgehäuses (9, 5") über eine Leitung (92), unter der Saugwirkung des Gebläses (94) Luft, welche den Motor vor Verschmutzung schützt und ggf. zusätzlich kühlt, hineinströmen kann.

10. Wicklungstragendes, ein Drehfeld erzeugendes Feldteil nach Anspruch 1 und 6, **dadurch gekennzeichnet, dass** es Wicklungsträger (116) mit Ansätzen (116') hat, die dazu dienen, die Anfänge der Wickelbänder (112A,113A) am Anfang des Wicklungsprozesses mitzunehmen und ggf. zusammen mit Isolationsfolien (115) diese Anfänge (112,113) untereinander zu isolieren, wobei diese, (112A, 113A, 115) zum Zwecke der Fixierung auf dem Wicklungsträger (116) Öffnungen (117) haben, wobei der Wickelträger je nach Bedarf seitliche Ansätze (116") hat, die die Enden der Bänder (112B, 113B) festhalten.

11. Wicklungstragendes, ein Drehfeld erzeugendes Feldteil dem Anspruch 10 nach, **dadurch gekennzeichnet, dass** die Enden der Wickelbänder (112-113) Steckerfahnen (112B, 113B) aufweisen, die durch die Anpassung, insbesondere durch das Falten der Enden der Wickelbänder (112, 113) oder durch die Anbringung geeigneter Stücke (112A' 113A') entstehen.

12. Wicklungstragendes, ein Drehfeld erzeugendes Feldteil den vorhergehenden Ansprüchen nach, **dadurch gekennzeichnet, dass** die U-Joche (11) mit montierten Wicklungen (112-113) mit einer isolierenden Masse umspritzt und auf diese Weise abgedichtet und zusammengehalten werden, und formdefinierte, leicht handhabbare U-förmige Joche (10) bilden.

## Claims

1. A rotating field generating part of an electronically switched- reluctance two phase machine, which is composed of single, wound yokes, whereby it comprises an assembly of several winding-carrying yokes (10), which are fitted on a nonmagnetic frame, this being constituted out of a bearing-carrying plate with columns **characterised in that that** these columns (53) extend from a front plate to a back plate with a bearing and that they have notches (52) which are roughly located opposite to the notches (15) of the U- yokes (10) and that a fluid or still malleable, solidifiable material is put in these notches (52, 15), so that this material fills these notches which are communicating with each other between the U- yokes (10) and the frame (5) with columns (53), these parts being in this way secured against each other.

2. A rotating field generating, winding carrying part according to the claim 1 **characterised in that that** the positive fixture of the U- yokes happens by means of a heat- softened sprig which is quickly introduced inside the notches 52-15 between the U- yokes (10) and the columns (53) of the frame (5) which is compressed immediately while still in a malleable state with a punch, so that it fills like a rivet the void between the notches 52, 15.

3. A rotating field generating, winding carrying part according to the claim 1 **characterised in that** the fixture of the U- yokes (10) and of the columns (53) of the frame (5) happens by means of expandable small tubes which are widened by means of internal pressure, so that these arrest the U- yokes (10) against the columns (53) of the frame (5) in the art of a sideward expanding lock.

4. A rotating field generating, winding carrying part according to the claim 1 **characterised in that** the pole areas (111) of the U- yokes (10) will be brought to abut against a calibrating roll (24) having the diameter of the rotor space, which is centred in the bearing holes (25) and that the U- yokes (10) will be fix in this position.

5. A rotating field generating, winding carrying part according to the claim 4 **characterised in that** the U- yokes (10) are being pressed against the calibrating roll (24) by an electromagnetic force.

6. A rotating field generating, winding carrying part according to the claim 1 **characterised in that** the windings of the U- yokes 10 are being carried out with winding leads (112, 113) which have variable cross sections along a turn (A, B, C, D) in the way that between the legs (B) of the U- yokes (11) every turn is thinner as at its sides (A, C, D).

7. A rotating field generating, winding carrying part according to the claim 1 **characterised in that** it is wholly or partially protected by a housing which is fitted at the frame (5), which fixtures or protects the parts of the motor.

8. A rotating field generating, winding carrying part according to the claim 1 particularly for fluid kinetic machines, **characterised in that** it is located in a motor housing (9, 5 "), this having thermal contact with heat stressed motor parts like the U- yokes (11) and power switches (21).

9. A rotating field generating, winding carrying part according to the claim 8 **characterised in that** the motor housing (9, 5") is located inside of an barrel-like part (93) of the intake duct and that the air which protects the motor against dirt and if necessary cools it flows in through a duct (92) inside the motor housing (9, 5 ") under the effect of the blower (94).

10. A rotating field generating, winding carrying part according to the claim 1 and 6 **characterised in that** it has winding bobbins (116) with lugs (116') which are intended to take along the beginnings of the winding bands (112A, 113A) at the beginning of the winding process and if necessary to insulate these beginnings (112A, 113A) with insulating foils (115) against each other, whereby these (112A, 113A, 115) have holes (117) which fix them on the winding bobbin (116), whereby this has if necessary sideward lugs (116") which hold the end of the bands (112B, 113B).

11. A rotating field generating, winding carrying part according to the claim 10 **characterised in that** the ends of the winding bands (112,113) have flat plug pins (112B,113B) which originate from the adapting, especially from the folding of the ends of the winding bands (112, 113) or through the addition of suitable parts (112A', 113A).

12. A rotating field generating, winding carrying part according to the preceding claims **characterised in that** the U- yokes (11) with mounted windings (112-113) are embedded through an injection moulding process in an insulating material whereby they are this way sealed and hold together so that they configure easy to handle, shape keeping U- jokes (10).

## Revendications

1. Partie active d'une machine a réluctance commutable électroniquement à deux phases, générant un champ magnétique rotatif, qui est composée de jougs individuels enroulés eux-mêmes constitués d'un ensemble de plusieurs jougs en forme d'U (10), portant des enroulements qui sont fixés dans un cadre non-magnétique, fait d'une plaque portant des paliers avec des colonnes, **caractérisé en ce que** ces colonnes (53) s'étendent d'une plaque avant jusqu'à une plaque arrière avec un palier et qu'ils ont des encoches (52) qui sont localisées à peu près en face des encoches (15) des jougs en forme d'U (10) et qu'une matière durcissable, en état liquide ou encore malléable, est placée dans ces encoches (52, 15), afin que cette matière remplisse ces encoches qui communiquent entre elles entre les jougs en forme d'U (10) et le cadre (5) avec les colonnes (53), ces parties étant fixées de cette façon l'une contre l'autre.

2. Partie active générant un champ magnétique rotatif qui porte des enroulements selon la revendication 1 **caractérisée en ce que** la fixation à forme finale des jougs en forme d'U se fait au moyen d'une goupille ramollie par la chaleur qui est rapidement introduite dans les encoches 52-15 entre les jougs en forme d'U (10) et les colonnes (53) du cadre (5) qui est cogné tout de suite dans l'état malléable avec une broche- marteau, afin qu'il remplisse comme un rivet le creux entre les encoches 52, 15.

3. Partie active générant un champ magnétique rotatif qui porte des enroulements selon la revendication 1 **caractérisé en ce que** la fixation des jougs en forme d'U (10) et des colonnes (53) du cadre (5) se fait au moyen de petits tubes expansibles qui sont élargis par une pression interne, pour que ceux-ci arrêtent les jougs en forme d'U (10) contre les colonnes (53) du cadre (5) en guise d'un pêne latéral.

4. Partie active générant un champ magnétique rotatif qui porte des enroulements selon la revendication 1 **caractérisée en ce que** les surfaces de pôle (111) des jougs en forme d'U (10) seront apportées pour aboutir contre un rouleau calibrant (24) ayant le diamètre de l'espace rotorique, qui est centré dans le trou du palier (25) et que les jougs en forme d'U (10) seront fixés dans cette position.

5. Partie active générant un champ magnétique rotatif qui porte des enroulements selon la revendication 4 **caractérisée en ce que** les jougs en forme d'U (10) sont appuyés contre le rouleau calibrant (24) par une force électromagnétique.

6. Partie active générant un champ magnétique rotatif qui porte des enroulements selon la revendication 1 **caractérisée en ce que** les enroulements des jougs en forme d'U 10 sont exécutés avec des conducteurs (112, 113) qui ont des sections transversales variables le long d'une spire (A, B, C, D) de telle façon que entre les branches (B) du joug en forme d'U (11) chaque spire est plus mince que celles d'à côté (A, C, D).

7. Partie active générant un champ magnétique rotatif qui porte des enroulements selon la revendication 1 **caractérisée en ce qu'**elle est entièrement ou partiellement protégée par une boîte qui est attachée au cadre (5), lequel assemble ou protège les parties du moteur.

8. Partie active générant un champ magnétique rotatif qui porte des enroulements selon la revendication 1 notamment pour les machines cinétiques à fluides **caractérisée en ce qu'**elle est localisée dans une boîte moteur (9, 5' '), celle-ci ayant contact thermique avec les parties du moteur exposés a la chaleur comme les jougs en forme d'U (11) et les interrupteurs de puissance (21).

9. Partie active générant un champ magnétique rotatif qui porte des enroulements selon la revendication 8 **caractérisée en ce que** la boîte du moteur (9, 5 ") est localisée à l'intérieur d'une partie élargie en forme de boîte (93) du conduit de prise d'air et que l'air qui protège le moteur contre l'encrassement et si nécessaire le refroidit coule par un conduit (92) dans la boîte du moteur (9, 5 ") sous l'effet de la soufflerie (94).

10. Partie active générant un champ magnétique rotatif qui porte des enroulements selon la revendication 1 et 6, **caractérisée en ce que** les corps des bobines (116) avec les ergots (116') qui couplent les commencements des bandes de bobinage (112A, 113A) au début du processus d'enroulement et si nécessaire isolent réciproquement ces commencements (112, 113) avec un film isolant (115) pourvu que ceux-ci (112A, 113A, 115) aient des trous (117) qui les attachent au corps de la bobine (116), qui est prévu si nécessaire avec des ergots latéraux (116") qui retient le bout des bandes (112B, 113B).

11. Partie active générant un champ magnétique rotatif qui porte des enroulements selon la revendication 1 **caractérisée en ce que** les bouts des bandes de bobinage (112, 113) ont des fiches plates (112B, 113B) qui proviennent de l'adaptation, notamment du pliage des bouts des bandes de bobinage (112, 113) ou par l'addition de pièces adéquates (112A', 113A).

12. Partie active générant un champ magnétique rotatif qui porte des enroulements selon les revendications précédentes **caractérisée en ce que** les jougs en forme d'U (11) avec les enroulements montés (112-113) sont moulés par injection dans un matériau isolant et sont de cette façon scellées et fixées et composent ainsi des jougs en forme d'U (10) qui peuvent être manipulés facilement.
